# FASCICULE DE BREVET EUROPEEN

(11) **EP 0 535 713 B1**
(45) Date de publication et mention de la délivrance du brevet: **19.04.1995**
(21) Numéro de dépôt: 92116993.4
(22) Date de dépôt: 02.10.1992
(51) Int. Cl.: A23L 1/226, A23L 1/227

(54) **Utilisation de la carbométhoxy-2-pyrroline-1**
Verwendung von Carbomethoxy-2-Pyrroline-1
Use of carbomethoxy-2-pyrroline-1

(30) Priorité: 03.10.1991 CH 2925/91
(43) Date de publication de la demande: 07.04.1993
(73) Titulaire: SOCIETE DES PRODUITS NESTLE S.A., 1800 Vevey (CH)
(72) Inventeur: Duby, Philippe, CH-1008 Prilly (CH); Huynh-Ba, Tuong, CH-1009 Pully (CH)
(74) Mandataire: Vuille, Roman

(56) Documents cités:
- EP-A- 0 065 462
- EP-A- 0 436 481
- US-A- 4 522 838
- CHEMISCHE BERICHTE, vol.108, 1975, WEINHEIM DE, pages 2547-2553 H.POISEL ET AL: "Dehydroaminosäuren aus Aminosäuren"

## Description

La présente invention concerne l'utilisation de carbométhoxy-2-pyrroline-1 dans le domaine alimentaire.

On connaît la carbométhoxy-2-pyrroline-1 entre autres par la publication de Poisel et Schmidt, parue dans Chem. Ber. (1975), 108, 2547-2553.
Il a été trouvé que, de façon surprenante, la carbométhoxy-2-pyrroline-1 possède des qualités organoleptiques particulières, susceptibles d'application dans le domaine alimentaire.
Ces caractéristiques organoleptiques peuvent être décrites ainsi: odeur croûte de pain, boulangerie, grillé, et fruité, fleuri, pâtisserie.
On a constaté que la carbométhoxy-2-pyrroline-1 peut avantageusement être utilisée pour modifier, renforcer et/ou améliorer le goût et l'arôme de produits alimentaires divers tels que le riz, le maïs ou le pain, en développant des notes de type grillé ou de croûte de pain.
On a également observé que la carbométhoxy-2-pyrroline-1 peut développer et/ou exhauster, selon la nature des produits auxquels elle est incorporée, en fonction également de la concentration à laquelle elle est utilisée, des notes aussi variées que celles de type "noisettes", "lardons" ou de type "laitbeurre" ou encore de type "céréales".

Un premier objet de la présente invention est donc l'utilisation de carbométhoxy-2-pyrroline-1 comme agent aromatisant susceptible d'être ajouté à un produit alimentaire.
Un deuxième objet de la présente invention est l'utilisation de carbométhoxy-2-pyrroline-1 dans une composition aromatisante susceptible d'être ajoutée à un produit alimentaire.

Un avantage de l'invention est d'utiliser un composé dont la préparation et la purification sont aisées ce qui permet une production à grande échelle.
Un autre avantage est l'utilisation d'un composé stable chimiquement, qui peut être stocké pendant une longue période sans risque de dégradation.

Selon l'invention, la carbométhoxy-2-pyrroline-1 peut donc être utilisée, seule, comme agent aromatisant.
La quantité à ajouter à un produit alimentaire dépend principalement de la nature du produit ainsi que de l'effet final souhaité. On ajoute, de préférence, 10 à 100 ppm de carbométhoxy-2-pyrroline-1 au produit alimentaire.
La carbométhoxy-2-pyrroline-1 peut également être utilisée dans l'élaboration d'une composition aromatisante. On peut par exemple préparer une composition aromatisante contenant 1 à 5% en poids de carbométhoxy-2-pyrroline-1 et présentant un arôme de maïs, de pain ou de pommes-de-terre. La composition ainsi obtenue peut être ajoutée au produit alimentaire final, à raison de 1 à 2 grammes par kilo de produit final.

L'invention est illustrée plus en détail dans les exemples suivants, dans lesquels les parties et pourcentages sont en poids.

### Exemple 1

On prépare la carbométhoxy-2-pyrroline-1 selon le procédé décrit par Poisel et Schmidt, dans Chem. Ber. (1975), 108, 2547.

On prépare plusieurs solutions aqueuses contenant de la carbométhoxy-2-pyrroline-1 à différentes concentrations.
On présente 50 ml de chaque solution, en erlenmeyer de 250 ml recouvert d'un couvercle, à 15 dégustateurs entraînés à l'analyse des arômes.

Le test se déroule de la manière suivante:
on présente 3 flacons à chaque dégustateur: un flacon contenant la solution aromatique et deux flacons d'eau. Le dégustateur doit humer l'espace de tête et désigner le flacon contenant la solution aromatique.
Le test est répété deux fois, pour des concentrations de 0,75, 1,5, 3,0 et 6,0 ppm.

Le seuil de perception par voie olfactive directe, c'est-à-dire la concentration pour laquelle on a 50% de perception, est déterminé à environ 1,8 ppm pour la carbométhoxy-2-pyrroline-1, après compilation des résultats sous la forme d'une droite de régression.
Par comparaison, on constate que la carbométhoxy-2-pyrroline-1, même pure, ne présente aucun arôme.

### Exemple 2

On détermine par "GC-sniffing" la quantité minimale de carbométhoxy-2-pyrroline-1 détectable olfactivement.
Pour ce faire, on analyse par chromatographie en phase gazeuse des solutions contenant la carbométhoxy-2-pyrroline-1 à différentes concentrations dans le dichlorométhane.
L'effluent gazeux est divisé par moitié entre un détecteur à ionisation de flamme et une sortie externe permettant la détection olfactive.
On utilise un chromatographe HP 5880 A, et les conditions analytiques sont les suivantes:
- colonne capillaire: DB-Wax, 30 m, 0,25 mm d.i.
- injection: 1 »l, sur colonne
- température du four: 50°C (1 min) à 150°C, à raison de 4°C par minute
- détection: ionisation de flamme, 250°C sniffing port, interface 200°C.

Un groupe de 6 personnes renifle, à trois reprises, à la sortie externe du chromatographe, des injections de 1 »l des solutions contenant 2,4 et 20 ng/ml de carbométhoxy-2-pyrroline-1, ce qui correspond respectivement à 1, 2 et 10 pg de carbométhoxy-2-pyrroline-1.

On obtient les résultats suivants:

| quantité de produit (pg) | 1 | 2 | 10 |
|---|---|---|---|
| olfaction positive (%) | 0 | 60 | 100 |

Si l'on fixe le seuil de perception à 50% de réponses positives, on obtient comme seuil: 2 pg (+/- 0,6 pg). Le débit d'air étant de 50 ml par minute au niveau du détecteur olfactif, et la largeur de pic chromatographique étant d'environ 5 secondes, on en déduit: seuil de perception = 0,5 pg/ml d'air (+/-0,15 pg).

### Exemple 3

On prépare une solution aqueuse contenant 50 g/l de carbométhoxy-2-pyrroline-1.
On ajoute 1 ml de cette solution à 1 kg de polenta préalablement préparée, et on laisse reposer 10 minutes.
On présente la polenta-test ainsi préparée, ainsi qu'une polenta-témoin ne contenant pas de carbométhoxy-2-pyrroline-1, à un groupe de 10 dégustateurs avertis.
La polenta-test présente des notes caractéristiques décrites comme "pain complet", "céréale" et "croûte de pain", qui ne sont pas présentes dans la polenta-témoin.

### Exemple 4

On fait cuire 100 g de riz dans 1 litre d'eau. On égoutte le riz après cuisson et l'on récupère l'eau de cuisson.
On prépare une solution aqueuse contenant 50 g de carbométhoxy-2-pyrroline-1 par litre d'eau.
On ajoute 0,2 ml de cette solution à 200 ml d'eau de cuisson du riz.
On présente ledit mélange à un groupe de 10 dégustateurs avertis.
Par comparaison avec une eau de cuisson-témoin, on constate que l'eau de cuisson-test présente une note renforcée de "céréale" et de type "riz parfumé".

### Exemple 5

On ajoute 1 ml d'une solution aqueuse contenant 50 g/l de carbométhoxy-2-pyrroline-1 à 1 litre de jus d'égouttage de maïs doux en boîte.
Par comparaison avec un jus nature, le jus-test ainsi préparé présente une note fraîche de "maïs", ainsi qu'une note exhaustée "lait-beurrée".

### Exemple 6

On prépare une composition aromatisante de type "croûte de pain" en ajoutant à 1 l d'éthanol les composés suivants:
- 50 g d'acétyl-2-pyrazine
- 10 g d'acétyl-2-thiazole
- 30 g de diacétyle
- 5 g d'éthyl-2-méthyl-3-pyrazine

On ajoute 0,1 g de cette composition à 1 litre d'eau préalablement salée à raison de 3 g de NaCl par litre.
On divise le mélange aqueux en deux lots de 500 ml.
Dans le premier lot, on ajoute 0,5 ml d'une solution aqueuse contenant 50 g/l de carbométhoxy-2-pyrroline-1.

Le second lot sert de témoin.
Un panet de 10 personnes compare tes deux lots.
Le premier lot apparaît meilleur que le second, avec une note renforcée de type "céréale", "croûte de pain" et une note " grillée" arrondie.

### Exemple 7

On prépare une composition aromatisante de type "maïs" en ajoutant à 1 l d'éthanol, les composés suivants:
- 0,5 g de diacétyle
- 5 g d'acétyl-2-pyrazine
- 5 g d'acétyl-2-thiazole
- 20 g de sulfure de diméthyle

On ajoute 0,1g de cette composition à 1 litre d'eau salée, à raison de 3g de NaCl par litre.
On divise le mélange aqueux en deux lots de 500 ml.
Dans le premier lot, on ajoute 0,5 ml d'une solution aqueuse contenant 50 g/l de carbométhoxy-2-pyrroline-1.
Le second lot sert de témoin.
Un panel de 10 personnes compare les deux lots.
Le premier lot apparaît meilleur que le second, avec une note renforcée "fraîche", légèrement "maïs grillé" et "amidon".

### Exemple 8

On prépare une composition aromatisante de type "pomme-de-terre-chips ", en ajoutant à 1 litre d'éthanol, les composés suivants:
- 5 g de triméthyl-pyrazine
- 2 g de d'éthyl-2-méthoxy-3-pyrazine
- 0,5 g de diacétyle
- 50 g de méthylthio-3-propanal
- 5 g d'acétyl-2-thiazole

On ajoute 0,1 g de cette composition à 1 litre d'eau préalablement salée à raison de 3 g de NaCl par litre.
On divise le mélange aqueux en deux lots de 500 ml.
Dans le premier lot, on ajoute 0,5 ml d'une solution aqueuse contenant 50 g/l de carbométhoxy-2-pyrroline-1.
Le second lot sert de témoin.
Un panel de 10 personnes compare les deux lots.
Le premier lot apparaît meilleur que le second et présente une note plus complète et de type "rissolée".

### Exemple 9

On prépare une composition aromatisante de type "riz", en ajoutant à 1 l d'éthanol, les composés suivants:
- 1 g de benzaldéhyde
- 5 g d'hexanal
- 1 g de vinyl-4-guaiacol
- 5 g de décanal
- 30 g d'acétyl-2-pyrazine
- 30 g d'acétyl-2-thiazole

On ajoute 0,1 g de cette composition à 1 litre d'eau préalablement salée à raison de 3 g de NaCl par litre.
On divise le mélange aqueux en deux lots de 500 ml.
Dans le premier lot, on ajoute 0,5 ml d'une solution aqueuse contenant 50 g/l de carbométhoxy-2-pyrroline-1.
Le second lot sert de témoin.
Un panel de 10 personnes compare les deux lots.
Le premier lot est plus typé "riz basmati" que le second lot, avec des notes "pain" et "céréales".

## Revendications

1. Utilisation de carbométhoxy-2-pyrroline-1 comme agent aromatisant susceptible d'être ajouté à un produit alimentaire.

2. Utilisation de carbométhoxy-2-pyrroline-1 comme ingrédient d'une composition aromatisante susceptible d'être ajoutée à un produit alimentaire.

3. Composition aromatisante comprenant de 1 à 5 % en poids de carbométhoxy-2-pyrroline-1.

## Claims

1. The use of 2-carbomethoxy-1-pyrroline as a flavouring agent capable of being added to a food product.

2. The use of 2-carbomethoxy-1-pyrroline as an ingredient of a flavouring composition capable of being added to a food product.

3. A flavouring composition containing 1 to 5% by weight of 2-carbomethoxy-1-pyrroline.

## Patentansprüche

1. Verwendung von Carbomethoxy-2-pyrrolin-1 als ein zu einem Lebensmittel zugebbares Aromamittel.

2. Verwendung von Carbomethoxy-2-pyrrolin-1 als ein Bestandteil einer zu einem Lebensmittel zugebbaren Aromazusammensetzung.

3. Aromamittelzusammensetzung, die von 1 bis 5 Gew.-% Carbomethoxy-2-pyrrolin-1 enthält.
